# EUROPÄISCHE PATENTSCHRIFT

(11) **EP 2 573 927 B1**
(45) Veröffentlichungstag und Bekanntmachung des Hinweises auf die Patenterteilung: **30.01.2019**
(21) Anmeldenummer: 11182743.2
(22) Anmeldetag: 26.09.2011
(51) Int. Cl.: H02M 7/5387, B60L 11/18, B60L 15/00

(54) **Umrichterbaueinheit**
Constructional unit with converter
Unité de montage d'un convertisseur

(43) Veröffentlichungstag der Anmeldung: 27.03.2013
(73) Patentinhaber: Siemens Aktiengesellschaft, 80333 München (DE)
(72) Erfinder: Köpken, Hans-Georg, 91056 Erlangen (DE)
(74) Vertreter: Dr. Gassner & Partner mbB

(56) Entgegenhaltungen:
- EP-A1- 1 780 864
- EP-A1- 2 065 268
- US-A1- 2010 080 030

## Beschreibung

Die Erfindung betrifft eine Umrichterbaueinheit, welche insbesondere als Teil eines Energieversorgungssystems für ein Elektrofahrzeug vorgesehen ist.
Die Weiterentwicklung von Elektrofahrzeugen für den Straßenverkehr als Alternative für Fahrzeuge mit Verbrennungsmotor wird derzeit mit einem hohen Aufwand vorangetrieben. Hierbei werden parallel verschiedene Entwicklungsziele verfolgt. Eines dieser Entwicklungsziele ist die stetige Verbesserung der Betriebssicherheit des Elektrofahrzeugs.
Im Fokus liegt dabei insbesondere das Energieversorgungssystem des Elektrofahrzeugs, das zur Versorgung des Elektromotors mit elektrischer Energie aus einem Hochvolt (HV)-Akkumulator dient. Mögliche Ausgestaltungen eines entsprechenden Energieversorgungssystems für Elektro- oder Hybridfahrzeuge sind beispielsweise aus der EP 2 065 268 A1 oder der EP 1 780 864 A1 bekannt. Ein Kernbestandteil eines solchen Energieversorgungssystems ist üblicherweise ein Umrichter, der eine von dem HV-Akkumulator ausgegebene Hochvolt (HV)-Gleichspannung in eine - meist mehrphasige - Wechselspannung für den Elektromotor umwandelt. Ein Energieversorgungssystem, das eine dreiphasige Wechselspannung sowie Niedervolt-Gleichspannung für verschiedene Bordnetze in einem Flugzeug erzeugt, ist ferner aus US 2010/0080030 A1 bekannt. Dort wird eine Umrichterbaueinheit offenbart, an der ein Hochvolt-Anschluss zur Zuführung einer Hochvolt-Gleichspannung aus einem Hochvolt-Akkumulator sowie ein Niedervolt-Anschluss zur Zuführung einer Niedervolt-Gleichspannung aus einem Niedervolt-Akkumulator angeordnet sind, sowie ein über den Hochvolt-Anschluss gespeister Umrichter zur Erzeugung einer Wechselspannung, und ein über den Hochvolt-Anschluss gespeister Gleichspannungswandler, der zur Steuerelektronik-Versorgung und zum Aufladen des Niedervolt-Akkumulators mit der Niedervolt-Gleichspannung verschaltet ist.

Zusätzlich zu dem HV-Akkumulator umfasst ein Elektrofahrzeug oft einen Niedervolt(NV)-Akkumulator, der die Bordelektronik des Elektrofahrzeugs mit einer Niedervolt(NV)-Gleichspannung versorgt. Aus diesem NV-Akkumulator ist üblicherweise auch eine Steuerelektronik für den Umrichter gespeist. Da ein Elektrofahrzeug - anders als ein Fahrzeug mit Verbrennungsmotor - nicht über eine Lichtmaschine verfügt, wird der NV-Akkumulator in der Regel mittels eines Gleichspannungswandlers aus dem HV-Akkumulator aufgeladen.

Der Umrichter und die zugeordnete Steuerelektronik sind üblicherweise in einem gemeinsamen Schutzgehäuse aufgenommen, das zur Versorgung des Umrichters mit einem HV-Anschluss, und zur Versorgung der Steuerelektronik mit einem NV-Anschluss versehen ist, und das - zusammen mit den darin aufgenommenen Komponenten - nachfolgend als "Umrichterbaueinheit" bezeichnet ist.

Da ein Ausfall der Steuerelektronik und ein damit verbundener Ausfall des Umrichters im Betrieb des Elektrofahrzeugs grundsätzlich zu Gefahrensituationen führen kann, weist eine solche Umrichterbaueinheit Sicherheitsmechanismen auf, die den Ausfall der Steuerelektronik nach Möglichkeit ausschließen sollen. So ist eine Umrichterbaueinheit insbesondere oft mit einer internen Not-Spannungsversorgung für die Steuerelektronik versehen. Für die Not-Spannungsversorgung der Steuerelektronik ist herkömmlicherweise ein weiterer Gleichspannungswandler vorgesehen, der bei einem Zusammenbruch der Niedervolt-Gleichspannung die Steuerelektronik weiterversorgt. Zur Erzielung einer bestmöglichen Fehlersicherheit ist der Gleichspannungswandler zusammen mit dem Umrichter und dessen Steuerelektronik in dem Schutzgehäuse aufgenommen.

Der Erfindung liegt die Aufgabe zugrunde, ein Energieversorgungssystem für ein Elektrofahrzeug zu vereinfachen, ohne dafür Einbußen an der Betriebs- und Ausfallsicherheit in Kauf nehmen zu müssen.

Diese Aufgabe wird bezüglich einer Umrichtereinheit erfindungsgemäß durch die Merkmale des Anspruchs 1 gelöst. Bezüglich eines Elektrofahrzeugs wird die obige Aufgabe erfindungsgemäß gelöst durch die Merkmale des Anspruchs 4. Vorteilhafte und teilweise für sich selbst erfinderische Ausgestaltungen und Weiterbildungen der Erfindung sind in den Unteransprüchen und der nachfolgenden Beschreibung dargelegt. Die nachfolgend beschriebene Umrichterbaueinheit ist insbesondere zum Einsatz in einem Elektrofahrzeug vorgesehen. Sie umfasst ein Schutzgehäuse, an dem ein Hochvolt (HV)-Anschluss zur Zuführung einer Hochvolt (HV)-Gleichspannung aus einem (gehäuseexternen) Hochvolt (HV)-Akkumulator sowie ein Niedervolt (NV)-Anschluss zur Zuführung einer Niedervolt (NV)-Gleichspannung aus einem (gehäuseexternen) Niedervolt (NV)-Akkumulator angeordnet sind.

Als gehäuseinterne, d.h. in dem Schutzgehäuse aufgenommene, Komponenten umfasst die Umrichterbaueinheit einen über den HV-Anschluss gespeisten Umrichter zur Erzeugung einer Antriebsspannung für den Elektromotor sowie eine über den NV-Anschluss gespeiste Steuerelektronik zur Steuerung des Umrichters. Zur Not-Versorgung der Steuerelektronik mit der NV-Gleichspannung umfasst die Umrichterbaueinheit weiterhin einen Gleichspannungswandler, der seinerseits über den HV-Anschluss gespeist ist. Erfindungsgemäß ist mittels dieses gehäuseinternen Gleichspannungswandler die NV-Gleichspannung auch über den NV-Anschluss ausgebbar, um den NV-Akkumulator bei Bedarf über diesen Gleichspannungswandler aufladen zu können. In einer ersten Erfindungsvariante ist der gehäuseinterne Gleichspannungswandler hierbei mit dem NV-Anschluss fest verschaltet. In einer zweiten Erfindungsvariante ist der Gleichspannungswandler dagegen mit dem NV-Anschluss verschaltbar. Gemäß letzterer Erfindungsvariante umfasst die Umrichterbaueinheit also Mittel, durch welche der Gleichspannungswandler zur Ausgabe der NV-Gleichspannung auf den NV-Anschluss geschaltet werden kann.

Als NV-Akkumulator kommt hierbei insbesondere ein Akkumulator zum Einsatz, wie er als sogenannte Starterbatterie in Fahrzeugen mit Verbrennungsmotor genutzt wird. Dementsprechend hat die NV-Gleichspannung typischerweise einen Spannungsbetrag von 12V oder 24V. Die von dem HV-Akkumulator ausgegebene HV-Spannung hat dagegen typischerweise einen Spannungsbetrag zwischen ca. 200V und 500 V und beträgt beispielsweise etwa 400V.

Durch die Verschaltung des gehäuseinternen Gleichspannungswandlers mit dem NV-Anschluss des Schutzgehäuses wird ermöglicht, ein und denselben Gleichspannungswandler sowohl für die Not-Versorgung der Umrichter-Steuerelektronik als auch zur Aufladung des NV-Akkumulators zu verwenden. Ein gehäuseexterner Gleichspannungswandler ist somit nicht mehr erforderlich und deshalb in der bevorzugten Ausgestaltung des Elektrofahrzeugs auch nicht mehr vorgesehen. Das Energieversorgungssystem des Elektrofahrzeugs kann hierdurch bei gleichzeitig hoher Betriebs- und Ausfallsicherheit einfach, und somit preisgünstig gestaltet werden.

In vorteilhafter Weiterbildung kann mittels des gehäuseinternen Gleichspannungswandlers die NV-Gleichspannung zudem einem Versorgungsnetz (Bordnetz) des Elektrofahrzeugs zugeführt werden. Über dieses Bordnetz erfolgt die Versorgung sämtlicher weiterer elektrischer Verbraucher, wie zum Beispiel der Fahrzeugbeleuchtung, der Klimaanlage oder des Navigationssystems, mit elektrischer Energie. Der Gleichspannungswandler übernimmt somit auch die Funktion der bei einem Fahrzeug mit Verbrennungsmotor typischerweise vorhandenen Lichtmaschine.

Um den gehäuseinternen Gleichspannungswandler gezielt steuern zu können, ist dem Gleichspannungswandler vorzugsweise ein externes Schaltsignal zuführbar, durch welches der Gleichspannungswandler einschaltbar ist, wenn der NV-Akkumulator aufgeladen werden soll. Sofern der Gleichspannungswandler nicht fest mit dem NV-Anschluss verschaltet ist, sondern dem NV-Anschluss zuschaltbar ist, werden entsprechende Mittel zur Aufschaltung des Gleichspannungswandlers auf den NV-Anschluss mit dem externen Schaltsignal betätigt. Das externe Schaltsignal wird beispielsweise von einer zentralen Steuereinheit des Elektrofahrzeugs generiert.

Des Weiteren ist dem Gleichspannungswandler in vorteilhafter Ausgestaltung der Erfindung ein internes Schaltsignal zuführbar, durch welches der Gleichspannungswandler für die Not-Versorgung der Steuerelektronik eingeschaltet wird. Das externe und interne Steuersignal sind dabei vorzugsweise, beispielsweise mittels eines logischen Gatterbausteins, ODERverknüpft.

Zur Sicherstellung einer hohen Betriebs- und Ausfallsicherheit ist das Schutzgehäuse vorzugweise schmutz- und wasserdicht abgeschlossen.

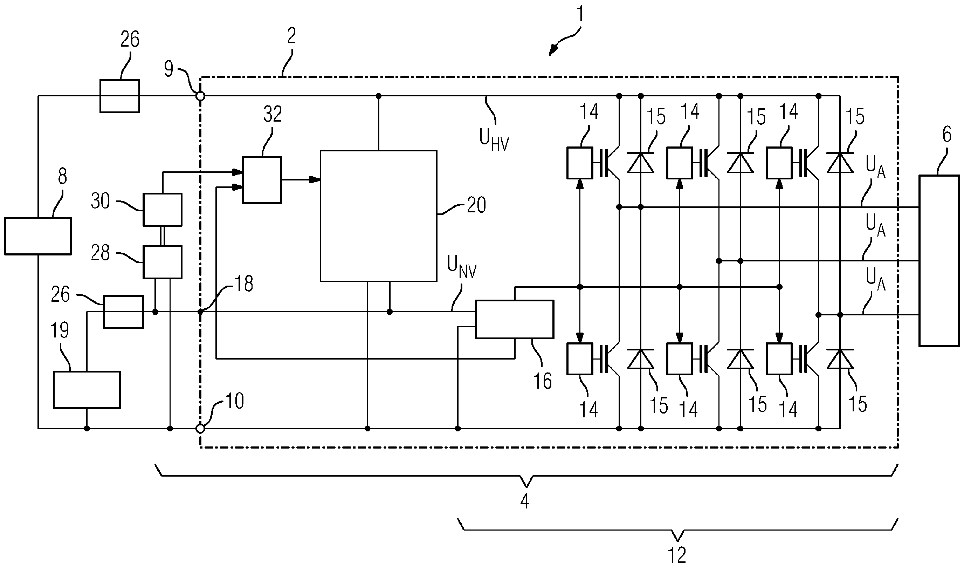

Ein Ausführungsbeispiel der Erfindung ist nachfolgend anhand einer schematischen Zeichnung näher erläutert. Darin zeigt die einzige Figur in einem Blockschaltbild ein Energieversorgungssystem eines Elektrofahrzeugs mit einer Umrichterbaueinheit.

Die in der Figur exemplarisch dargestellte Umrichterbaueinheit 1, die in einem schmutz- und wasserdichten Schutzgehäuse 2 untergebracht ist, ist Teil eines Energieversorgungssystems 4, welches zur Versorgung eines Elektromotors 6 eines nicht näher dargestellten Elektrofahrzeugs mit elektrischer Energie aus einem Hochvolt-Akkumulator 8 (kurz: HV-Akkumulator 8) dient. Der HV-Akkumulator 8 stellt hierbei eine Hochvolt-Gleichspannung UHV (kurz: HV-Gleichspannung UHV) mit einem Nennwert von 400V zur Verfügung.

Die in dem HV-Akkumulator 8 zwischengespeicherte Energie wird im Fahrbetrieb des Elektrofahrzeugs über einen Hochvolt-Anschluss 9 (kurz: HV-Anschluss 9) des Schutzgehäuses 2 in die Umrichterbaueinheit 1 eingespeist.

Die zwischen dem HV-Anschluss 9 und einem Masseanschluss 10 des Schutzgehäuses 2 anliegende HV-Gleichspannung UHV mittels eines in dem Schutzgehäuse 2 aufgenommenen Umrichters 12 der Umrichterbaueinheit 1 in eine dreiphasige Wechselspannung umgewandelt, die dem Elektromotor 6 als Antriebsspannung UA zugeführt wird. Der Umrichter 12 ist dabei als bidirektionaler Umrichter ausgeführt. Durch den Umrichter 12 ist somit ein Energierückgewinnungssystem realisiert, durch welches ein Teil der kinetischen Energie des Elektrofahrzeugs bei einem Bremsvorgang in elektrische Energie umgewandelt und in den HV-Akkumulator 8 rückgespeist wird.

Der Umrichter 12 ist in an sich üblicher Bauart durch eine Brückenschaltung aus drei parallel zueinander zwischen den HV-Anschluss 9 und den Masseanschluss 10 geschalteten Halbbrücken gebildet. Jede Halbbrücke umfasst zwei in Serie geschaltete Halbleiterschalter 14, z.B. in Form von IGBTs, zwischen denen jeweils eine der drei Motorphasen des Elektromotors 6 angeklemmt ist. Jedem Halbleiterschalter 14 des Umrichters 12 ist eine zugeordnete Freilaufdiode 15 parallel geschaltet.

Zur Ansteuerung der Halbleiterschalter 14 umfasst die Umrichterbaueinheit 1 des Weiteren eine ebenfalls in dem Schutzgehäuse 2 aufgenommene Steuerelektronik 16. Diese Steuerelektronik 16 ist ihrerseits durch eine Niedervolt-Gleichspannung UNV (kurz: NV-Gleichspannung UNV) versorgt, die der Umrichterbaueinheit 1 im Normalbetrieb über einen Niedervolt-Anschluss 18 (kurz: NV-Anschluss 18) des Schutzgehäuses 2 aus einem gehäuseexternen Niedervolt-Akkumulator 19 (kurz: NV-Akkumulator 19) zugeführt ist. Der NV-Akkumulator 19 stellt die NV-Gleichspannung UNV mit einem Spannungsbetrag von 12V zur Verfügung.

Da ein Ausfall der Steuerelektronik 16 während des Fahrbetriebs des Elektrofahrzeugs Störungen im Betriebsverhalten des Umrichters 12 und des durch diesen versorgten Elektromotors 6 verursachen kann, die mit einem nicht vernachlässigbaren Gefährdungspotential für die Fahrzeuginsassen verbunden sind, gilt es sicherzustellen, dass die Steuerelektronik 16 stets ausreichend mit elektrischer Energie versorgt wird, solange das Elektrofahrzeug im Fahrbetrieb ist. Diese Versorgung soll dabei selbst dann aufrecht erhalten bleiben, wenn im Energieversorgungssystem 4 ein Fehler auftritt, wie er typischerweise zum Beispiel durch Drahtbruch oder einen sich lösenden Stecker hervorgerufen wird.

Vor diesem Hintergrund ist für die Steuerelektronik 16 eine redundante Energieversorgung vorgesehen. Zur Herstellung der Redundanz umfasst die Umrichterbaueinheit 1 einen Gleichspannungswandler 20, der dazu dient, der Steuerelektronik 16 - bei Ausfall der normalen Spannungsversorgung aus dem NV-Akkumulator 19 - im Rahmen einer Not-Versorgung weiter die NV-Gleichspannung UNV zuzuführen.

Der Gleichspannungswandler 20 erzeugt die NV-Gleichspannung UNV aus der HV-Gleichspannung UHV. Er ist hierzu primärseitig mit dem HV-Anschluss 9 und sekundärseitig mit einem Versorgungsspannungseingang der Steuerelektronik 16 verschaltet.

Mit der vorstehend beschriebenen Schaltungsanordnung ist somit eine vollständig redundante Spannungsversorgung für die Steuerelektronik 16 geschaffen, die durch zwei Akkumulatoren 8 und 19 sowie zwei zugehörige, voneinander unabhängige Versorgungs-Stromkreise gebildet ist.

In beiden Versorgungs-Stromkreisen sind außerhalb der Umrichterbaueinheit 1 Schmelzsicherungen 26 vorgesehen, die bei einer Störung im entsprechenden Versorgungs-Stromkreis auslösen und somit den Stromfluss in diesem Versorgungs-Stromkreis unterbrechen. Sobald eine der Schmelzsicherungen 26 einen der Versorgungs-Stromkreise stillgelegt hat, wird im Folgenden der defektfreie und somit verbleibende Versorgungs-Stromkreis zur Versorgung der Steuerelektronik 16 genutzt. Die Versorgung der Steuerelektronik 16 fällt somit erst in dem unwahrscheinlichen Fall aus, dass in beiden Versorgungs-Stromkreisen gleichzeitig ein Fehler auftritt.

Bei dem dargestellten Energieversorgungssystem 4 wird der Gleichspannungswandler 20 der Umrichterbaueinheit 1 zusätzlich zur Aufladung des NV-Akkumulators 19 aus dem HV-Akkumulator 9 genutzt. Der Gleichspannungswandler 20 ist hierzu sekundärseitig derart mit dem NV-Anschluss 18 verschaltet, dass die von dem Gleichspannungswandler 20 erzeugte NV-Gleichspannung über den NV-Anschluss 18 an ein gehäuseexternes Versorgungsnetz 28 ausgegeben werden kann, in das der NV-Akkumulator 28 eingebunden ist. Das Versorgungsnetz 28 (Bordnetz) dient zudem auch zur Versorgung der übrigen elektrischen Verbraucher des Elektrofahrzeugs, so dass auch diese übrigen Verbraucher - insbesondere eine zentrale Steuereinheit 30 des Elektrofahrzeugs - über den Gleichspannungswandler 20 der Umrichterbaueinheit 1 mit der NV-Gleichspannung UNV versorgt werden kann.

Vorzugsweise ist der Gleichspannungswandler 20 im Betrieb des Elektrofahrzeugs nicht ständig aktiv, sondern nur dann, wenn er zum Aufladen des NV-Akkumulators 19, zur Speisung des Versorgungsnetzes 28 oder zur Not-Versorgung der Steuerelektronik 16 benötigt wird.

Zur Steuerung des Gleichspannungswandlers 20 ist deshalb einerseits eine signaltechnische Verbindung zwischen der zentralen Steuereinheit 30 und dem Gleichspannungswandler 20 vorgesehen, über die die zentrale Steuereinheit 30 mittels eines einfachen, externes SE Schaltsignals den Gleichspannungswandler 20 ansteuert, d.h. einschaltet, wenn der NV-Akkumulator 19 aufzuladen ist.

Ein weiteres, internes Schaltsignal SI wird von der Steuerelektronik 16 bei einem Einbruch oder Ausfall der NV-Gleichspannung UNV generiert und gehäuseintern dem Gleichspannungswandler 20 zu dessen Einschaltung zugeleitet.

Beide Schaltsignale SE und SI sind gehäuseintern in einem ODER-Gatter 32 zusammengeschaltet, d.h. miteinander ODERverknüpft, und als resultierendes Schaltsignal S dem Gleichspannungswandler 20 zugeführt.

Diese Verknüpfung hat die Wirkung, dass der Gleichspannungswandler 20 eingeschaltet wird, sobald mindestens eines der Schaltsignale SE und SI anliegt, wobei er in diesem Fall die NV-Gleichspannung UNV sowohl an den Versorgungsspannungseingang der Steuerelektronik 16 als auch an den NV-Anschluss 18 anlegt.
Im Rahmen des Energieversorgungssystems 4 ist der Gleichspannungswandler 20 vorzugsweise das einzige (systeminterne) Mittel zur Aufladung des NV-Akkumulators. Ein separater Ladewandler, wie er bei herkömmlichen Energieversorgungssystemen mitunter vorgesehen ist, ist bei dem in der Figur dargestellten Energieversorgungssystem 4 nicht vorhanden.
Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen, der durch die Ansprüche definiert ist.

## Patentansprüche

1. Umrichterbaueinheit (1) für einen Elektromotor (6) eines Elektrofahrzeugs, umfassend
- ein Schutzgehäuse (2), an dem
- ein Hochvolt-Anschluss (9) zur Zuführung einer Hochvolt-Gleichspannung (U_{HV}) aus einem Hochvolt-Akkumulator (8) sowie
- ein Niedervolt-Anschluss (18) zur Zuführung einer Niedervolt-Gleichspannung (U_{NV}) aus einem Niedervolt-Akkumulator (19)
angeordnet sind,
sowie, in dem Schutzgehäuse (2) aufgenommen,
- einen über den Hochvolt-Anschluss (9) gespeisten Umrichter (12) zur Erzeugung einer Antriebsspannung (U_{A}) für den Elektromotor (6),
- eine über den Niedervolt-Anschluss (18) gespeiste Steuerelektronik (16) zur Steuerung des Umrichters (12),
- einen über den Hochvolt-Anschluss (9) gespeisten Gleichspannungswandler (20), der zur Not-Versorgung der Steuerelektronik (16) mit der Niedervolt-Gleichspannung (U_{NV}) gehäuseintern mit der Steuerelektronik (16) verschaltet ist,
wobei der Gleichspannungswandler (20) zum Aufladen des Niedervolt-Akkumulators (19) auch zur Ausgabe der Niedervolt-Gleichspannung (U_{NV}) über den Niedervolt-Anschluss (18) verschaltet oder verschaltbar ist.

2. Umrichterbaueinheit (1) nach Anspruch 1,
wobei der Gleichspannungswandler (20) zum Aufladen des Niedervolt-Akkumulators (19) durch ein gehäuseexternes Steuersignal (SE) einschaltbar ist und/oder mit dem Niedervolt-Anschluss (18) verschaltbar ist.

3. Umrichterbaueinheit (1) nach Anspruch 1 oder 2,
wobei der Gleichspannungswandler (20) zur Notversorgung der Steuerelektronik (16) mittels eines gehäuseinternen Steuersignals (SI) einschaltbar ist.

4. Elektrofahrzeug mit einem Hochvolt-Akkumulator (8), mit einem Niedervolt-Akkumulator (19) sowie mit einer Umrichterbaueinheit (1) nach einem der Ansprüche 1 bis 3, wobei der Hochvolt-Akkumulator (8) mit dem Hochvolt-Anschluss (9) der Umrichterbaueinheit (1) verschaltet ist, und wobei der Niedervolt-Akkumulator (19) mit dem Niedervolt-Anschluss (18) der Umrichterbaueinheit (1) verschaltet ist.

5. Elektrofahrzeug nach Anspruch 4,
wobei der Niedervolt-Akkumulator (19) zu dessen Aufladung nur mit dem Gleichspannungswandler (20) der Umrichterbaueinheit (1) verschaltet ist.

## Claims

1. A constructional unit with a converter (1) for an electric motor (6) of an electric vehicle, comprising
- a protective housing (2) whereon
- a high-voltage terminal (9) for supplying a high-voltage direct current (U_{HV}) from a high-voltage accumulator (8) and
- a low-voltage terminal (18) for supplying a low-voltage direct current (U_{NV}) from a low-voltage accumulator (19)
are arranged,
as well as accommodated in the protective housing (2) there is
- a converter (12) powered through the high-voltage terminal (9) for generating a drive voltage (U_{A}) for the electric motor (6),
- control electronics (16) powered through the low-voltage terminal (18) for controlling the converter (12),
- a DC converter (20) which is powered through the high-voltage terminal (9) and, within the housing, is connected to the control electronics (16) for emergency control electronics (16) low-voltage direct current (U_{NV}) supply,
wherein the DC converter (20), for charging the low voltage accumulator (19), is also interconnected or is able to be interconnected through the low-voltage terminal (18), to output the low-voltage direct current (U_{NV}).

2. The constructional unit with a converter (1) according to claim 1,
wherein the DC converter (20) can be turned on by a control signal (SE) external to the housing and/or can be connected to the low-voltage terminal (18), for charging the low voltage accumulator (19).

3. The constructional unit with a converter (1) according to claim 1 or 2,
wherein the DC converter (20) is able to be turned on by means of a control signal (SI) internal to the housing for emergency control electronics (16) power supply.

4. An electric vehicle having a high-voltage accumulator (8), comprising a low-voltage accumulator (19) and a constructional unit with a converter (1) according to one of claims 1 to 3, the high-voltage accumulator (8) being connected to the high-voltage terminal (9) of the constructional unit with a converter (1), and the low-voltage accumulator (19) being connected to the low-voltage terminal (18) of the constructional unit with a converter (1).

5. The electric vehicle according to claim 4,
wherein the low-voltage accumulator (19) is connected solely to the DC converter (20) of the constructional unit with a converter (1), to become charged.

## Revendications

1. Unité de montage d'un convertisseur (1) pour un moteur électrique (6) d'un véhicule électrique, comprenant
- un carter de protection (2) sur lequel sont disposés
- une borne haute tension (9) pour l'alimentation d'un courant continu haute tension (U_{HV}) à partir d'un accumulateur haute tension (8) ainsi qu'
- une borne basse tension (18) pour l'alimentation d'un courant continu basse tension (U_{NV}) à partir d'un accumulateur basse tension (19),
ainsi que, logés dans le carter de protection (2),
- un convertisseur (12) alimenté via la borne haute tension (9) pour la génération
d'une tension d'entraînement (U_{A}) pour le moteur électrique (6),
- une unité de commande électronique (16) alimentée via la borne basse tension (18) pour la commande du convertisseur (12),
- un convertisseur de tension continue (20) alimenté via la borne haute tension (9) qui est interconnecté pour l'alimentation d'urgence de l'unité de commande électronique (16) avec le courant continu basse tension (U_{NV}) à l'intérieur du boîtier à l'unité de commande électronique (16),
en ce que le convertisseur de tension continue (20) est interconnecté ou peut être interconnecté pour le chargement de l'accumulateur basse tension (19) ainsi que pour la sortie du courant continu basse tension (U_{NV}) via la borne basse tension (18).

2. Unité de montage d'un convertisseur (1) selon la revendication 1, en ce que le convertisseur de tension continue (20) pour le chargement de l'accumulateur basse tension (19) peut être activé par un signal de commande externe au boîtier (SE) et/ou peut être interconnecté à la borne basse tension (18).

3. Unité de montage d'un convertisseur (1) selon la revendication 1 ou 2, en ce que le convertisseur de tension continue (20) pour l'alimentation d'urgence de l'unité de commande électronique (16) peut être activé au moyen d'un signal de commande interne au boîtier (SI).

4. Véhicule électrique comportant un accumulateur haute tension (8), un accumulateur basse tension (19) ainsi qu'une unité de montage d'un convertisseur (1) selon l'une des revendications 1 à 3, en ce que l'accumulateur haute tension (8) est interconnecté à la borne haute tension (9) de l'unité de montage d'un convertisseur (1), et en ce que l'accumulateur basse tension (19) est interconnecté à la borne basse tension (18) de l'unité de montage d'un convertisseur (1).

5. Véhicule électrique selon la revendication 4, en ce que l'accumulateur basse tension (19) est interconnecté pour sa charge uniquement au convertisseur de tension continue (20) de l'unité de montage d'un convertisseur (1).
